# FASCICULE DE BREVET EUROPEEN

(11) **EP 0 781 395 B1**
(45) Date de publication et mention de la délivrance du brevet: **13.11.2002**
(21) Numéro de dépôt: 96904704.2
(22) Date de dépôt: 08.03.1996
(51) Int. Cl.: F28D 20/00

(54) **ACCUMULATEUR DE CHALEUR**
WÄRMESPEICHER
HEAT STORE

(30) Priorité: 10.03.1995 CH 68495
(43) Date de publication de la demande: 02.07.1997
(73) Titulaire: Deltablock S.A., 1724 Luxembourg (LU)
(72) Inventeur: Schmidt, Michel, 1163 Etoy (CH)
(74) Mandataire: Ganguillet, Cyril
(86) Numéro de dépôt international: CH9600090
(87) Numéro de publication internationale: WO96028703

(56) Documents cités:
- EP-A- 0 216 237
- DE-A- 4 036 035
- DE-A- 4 419 887
- GB-A- 2 020 797

## Description

La présente invention a pour objet un accumulateur de chaleur à fort pouvoir d'accumulation thermique.

On connaît l'importance grandissante des énergies renouvelables, et en particulier de l'énergie solaire pour la production d'eau chaude à usage sanitaire et de l'eau de chauffage pour les bâtiments.

Cependant, du fait que l'ensoleillement qui détermine la quantité d'énergie solaire captée varie fortement selon les rythmes journalier et saisonnier et ne correspond pas forcément aux besoins du moment, on a besoin d'accumuler la chaleur. A cet effet, on utilise le plus souvent la thermie . introduite dans un certain volume d'eau contenu dans un réservoir calorifique. Ce système présente notamment des inconvénients liés au fait qu'il est nécessaire de traiter l'eau d'accumulation avec des produits toxiques.

D'autres systèmes utilisent une masse de sable ou de gravier stockée dans un contenant en forme de cuve, équipée d'un circuit à circulation d'eau, le réservoir étant généralement associé à des capteurs dans lesquels le liquide caloporteur est généralement de l'eau. D'autres systèmes encore proposent un bac contenant des boulets de pierre, associés à des capteurs à air circulant dans le bac.

Enfin, d'autres accumulateurs de chaleur utilisent la terre comme agent accumulateur thermique. Ces accumulateurs sont destinés au chauffage des maisons d'habitation et sont installés dans leurs jardins ou plus simplement au voisinage direct de la maison à chauffer. Toutefois, ces capteurs ne sont pas satisfaisants, notamment à cause de leur mauvaise isolation et à cause du faible rendement obtenu lors du transfert calorifique du capteur solaire à l'accumulateur et de la difficile migration de chaleur dans la terre. D'autre part, ces accumulateurs sont nécessairement très volumineux et il est nécessaire d'extraire une grande quantité de terre pour poser, assembler et isoler thermiquement les différents éléments composant l'installation, ce qui entraîne des frais importants. A cela s'ajoute le fait que la surface de terrain disponible autour d'une maison est généralement limitée. De plus, avec ces accumulateurs de chaleur en terre, une accumulation de l'énergie solaire à partir de la période de plein ensoleillement de l'été et jusqu'à la période de consommation maximum en hiver n'est réalisable que moyennant un investissement important ou plus probablement impossible à réaliser.

Le document GB-A-2 020 797 décrit un capteur de chaleur par exposition au soleil de la surface d'une dalle en béton qui transmet la chaleur captée à un fluide circulant dans des conduits placés dans la dalle, le dispositif pouvant également fonctionner comme évaporateur de température. Bien que la dalle en béton puisse, si son épaisseur est suffisante, présenter une certaine inertie momentanée d'accumulation de chaleur, cette accumulation n'est tout au plus que de quelques heures et n'a rien à voir avec un cycle saisonnier.

Le but de la présente invention est de proposer un accumulateur de chaleur permettant de remédier aux inconvénients des systèmes connus et permettant d'accumuler une quantité importante de chaleur de moyenne à haute température, en pouvant la stocker sur plusieurs mois.

A cet effet, l'invention concerne un accumulateur de chaleur tel que défini dans l'une des revendications indépendantes 1 ou 2.

L'application et l'utilisation de l'accumulateur de chaleur selon l'invention, pour la captation et l'accumulation, peuvent se faire avec diverses sources d'énergie, à savoir : bois, biogaz, fossiles, géothermiques ou autres, mais plus particulièrement par différents types de capteurs solaires à circulation par liquides caloporteurs ou autres.

Dans la suite de la description, c'est à cette application particulière que l'on se référera, sans que cela implique une limitation de l'invention.

Deux formes d'exécution de l'invention décrites ci-dessous sont référencées selon les dessins suivants :
- la fig. 1 est une vue en coupe schématique d'une première forme d'exécution de l'accumulateur de chaleur;
- la fig. 2 est une vue du dessus en coupe schématique de l'accumulateur de chaleur en suivant la ligne 9-9 de la fig. 1;
- la fig. 3 est une vue en coupe schématique d'une deuxième forme d'exécution de l'accumulateur de chaleur, composée de plusieurs blocs en matériau solide raccordés ensemble.

Le rendement thermique de l'accumulateur de chaleur 1, conforme à l'invention, est très élevé. Aucune perte ne se produit lors du transfert thermique du circuit 2-6 au bloc solide en béton 3 , ainsi que du bloc solide en béton 3 au circuit 2-6 . L'énergie accumulée à l'intérieur du bloc en béton 3 est retenue par l'enveloppe en matière isolante thermiquement 5 .

L'enveloppe thermique 5 empêche la chaleur stockée dans le bloc en béton 3 , de s'échapper par le bas et le haut, ainsi que par les côtés.

L'accumulateur de chaleur comprenant le bloc en béton, conforme à l'invention est posé en surface ou enterré dans le sol; dans ce cas, ledit bloc 3 est recouvert par de la terre, d'une épaisseur variable. Le volume de la terre à extraire est donc de peu supérieur au volume du bloc en béton 3 , de son enveloppe en matière isolante 5 et de l'enceinte 4 les contenant. Dans une forme particulière, le volume de terre à extraire comprend le volume du bloc et de son enveloppe isolante.

Les coûts de fabrication de l'accumulateur de chaleur, conforme à l'invention, sont extrêmement faibles, comparés aux frais et investissement nécessaires à la fabrication et installation des différents accumulateurs de chaleur connus et de ceux en particulier utilisant la terre comme agent calorifique.

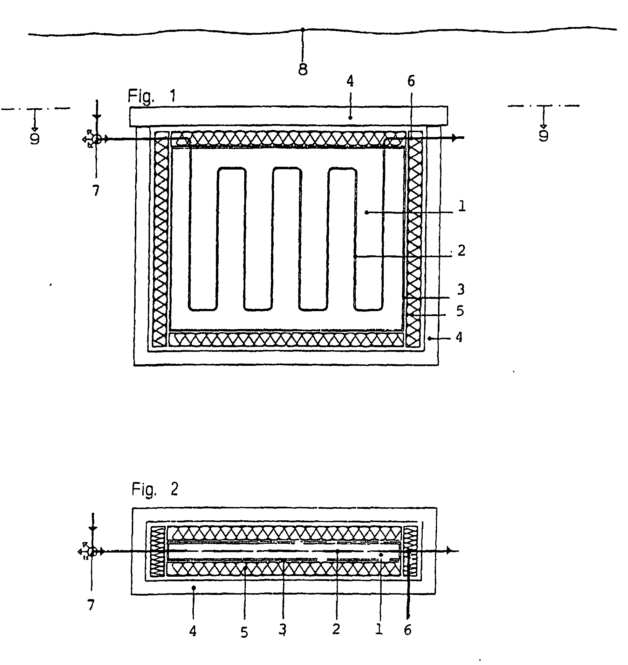

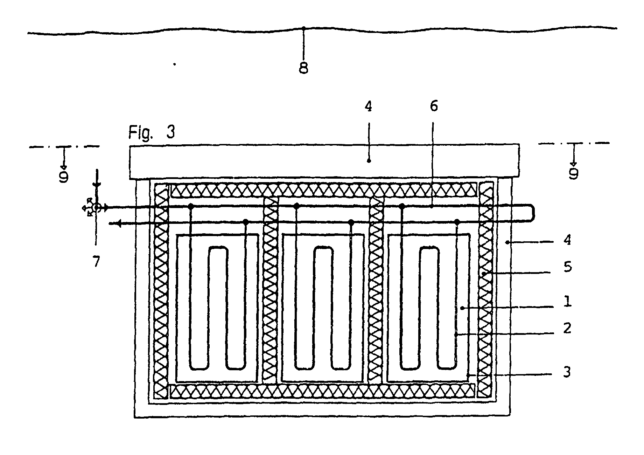

Le montage du bloc en béton, conforme à l'invention, peut être réalisé d'une manière simple par l'homme de métier et ceci dans une forme d'exécution individuelle (Fig.1) ou couplé à plusieurs blocs en béton(Fig.3), ceci dans le but de moduler la capacité totale de l'accumulateur de chaleur et de pouvoir pomper la totalité de l'énergie thermique à disposition et d'avoir ainsi, la possibilité de régler individuellement la température de chaque bloc en béton 3 et de ce fait, pouvoir utiliser le plus judicieusement la Stratification thermique et la migration de la chaleur à l'intérieur de chaque bloc d'accumulateur de chaleur 3 constituant un ensemble (Fig.3), cet ensemble donnant la possibilité de gérer de manière très efficace l'énergie thermique à véhiculer par un fluide caloporteur à l'intérieur du circuit 2-6 et pouvant ainsi moduler de manière très fine la quantité de chaleur à distribuer aux différents consommateurs d'énergie.

Une forme d'éxécution simplifiée de l'accumulateur de chaleur, conforme à l'invention, selon les Fig.1 et Fig.3 est réalisable sans l'enceinte 4 et sans l'enveloppe isolante 5 pour une utilisation de l'accumulateur de chaleur à basse et moyenne température.

La durée de vie de l'accumulateur de chaleur en béton, conforme à l'invention, est de très longue durée. En effet, nous pouvons nous référer dans le temps, aux ouvrages et oeuvres commis et réalisés avec comme base le béton dans le génie civil et dans la construction de bâtiments et de fait pouvoir en garantir sa totale fiabilité ainsi que la nouveauté d'utiliser ce matériau comme agent accumulateur de chaleur.

La conception de l'accumulateur de chaleur, conforme à l'invention, se prête particulièrement bien pour les maisons individuelles ou groupes d'habitations collectifs, immeubles locatifs, commerciaux, industriels et autres. L'accumulateur de chaleur peut être installé soit dans une enceinte 4 ou directement en pleine terre 8 .

L'implantation de l'accumulateur de chaleur, conforme à l'invention, dans le cas de figure de son implantation dans un sol composé de terre, peut se réaliser dans le pourtour direct des murs de fondations de l'objet à chauffer, mais en respectant toutefois une distance minimale raisonnable, de façon qu'il n'y ait pas un contact direct entre les deux constructions et de conserver de ce fait une réserve de sécurité suffisante pour la dilatation de l'accumulateur de chaleur 3 en fonction de sa température, selon Fig.1 et Fig.3 .

Le raccordement de l'accumulateur de chaleur, conforme à l'invention, s'effectue par ordre logique aux consommateurs d'énergies de l'ouvrage à raccorder (villas,immeubles et autres), comportant au moins un circuit 6 et un conduit 2 et éventuellement une vanne multivoie 7 , cette dernière vanne n'étant pas obligatoirement nécessaire au bon fonctionnement de l'accumulateur de chaleur, ensuite est à poser la couverture mécanique et thermique de l'ensemble de l'installation de l'accumulateur de chaleur Fig.1 et Fig.3 , en dernier lieu, on recouvre de terre ordinaire, végétale ou autres matériaux, on règle la mise à niveau du terrain 8 , ainsi l'accumulateur de chaleur Fig.1 et Fig.3 conforme à l'invention, est prêt à fonctionner.

## Revendications

1. Accumulateur de chaleur comprenant au moins un bloc (3) en béton destiné au stockage d'énergie calorifique introduite dans le bloc par un fluide caloporteur circulant dans au moins un circuit (6), ce dernier étant composé en partie d'un conduit (2) en matière à bonne conductibilité thermique noyé à l'intérieur du bloc (3), ce circuit (6) servant aussi à évacuer l'énergie ainsi accumulée vers un consommateur de chaleur, ledit bloc étant installé dans une enceinte (4).

2. Accumulateur de chaleur comprenant au moins un bloc (3) en béton destiné au stockage d'énergie calorifique introduite dans le bloc par un fluide caloporteur circulant dans au moins un circuit (6), ce dernier étant composé en partie d'un conduit (2) en matière à bonne conductibilité thermique noyé à l'intérieur du bloc (3), ce circuit (6) servant aussi à évacuer l'énergie ainsi accumulée vers un consommateur de chaleur, le dit bloc étant installé directement en terre.

3. Accumulateur de chaleur selon l'une des revendications 1 ou 2, **caractérisé en ce que** ledit bloc en béton (3) est isolé thermiquement (5).

4. Accumulateur de chaleur selon l'une des revendications 1 ou 2, **caractérisé en ce que** ledit bloc en béton (3) est de forme parallélépipédique positionné verticalement ou horizontalement.

5. Accumulateur de chaleur selon l'une des revendications 1 ou 2, **caractérisé en ce que** le circuit (6) comporte au moins une vanne multivoie (7) servant à diriger l'énergie calorifique dans le bloc (3) ou directement au consommateur de chaleur.

6. Accumulateur de chaleur selon l'une des revendications 1 ou 2, **caractérisé en ce qu'**il est constitué de plusieurs blocs (3) en béton couplés les uns aux autres.

## Patentansprüche

1. Wärmespeicher, umfassend mindestens einen Block (3) aus Beton, der zur Speicherung von Wärmeenergie bestimmt ist, die in den Block durch ein wärmeübertragendes Fluid eingeführt wird, das in mindestens einem Kreislauf (6) zirkuliert, wobei der letztgenannte teilweise aus einer Leitung (2) aus einem Material mit guter Temperaturleitfähigkeit gebildet ist, die im Inneren des Blocks (3) versenkt ist, wobei dieser Kreislauf (6) auch dazu dient, die auf diese Weise angesammelte Energie zu einem Wärmeverbraucher abzuführen, wobei der Block in einer Einfassung (4) installiert ist.

2. Wärmespeicher, umfassend mindestens einen Block (3) aus Beton, der zur Speicherung von Wärmeenergie bestimmt ist, die in den Block durch ein wärmeübertragendes Fluid eingeführt wird, das in mindestens einem Kreislauf (6) zirkuliert, wobei der letztgenannte teilweise aus einer Leitung (2) aus einem Material mit guter Temperaturleitfähigkeit gebildet ist, die im Inneren des Blocks (3) versenkt ist, wobei dieser Kreislauf (6) auch dazu dient, die auf diese Weise angesammelte Energie zu einem Wärmeverbraucher abzuführen, wobei der Block direkt in der Erde installiert ist.

3. Wärmespeicher nach einem der Ansprüche 1 oder 2, **dadurch gekennzeichnet, dass** der Betonblock (3) thermisch isoliert ist (5).

4. Wärmespeicher nach einem der Ansprüche 1 oder 2, **dadurch gekennzeichnet, dass** der Betonblock (3) die Form eines Parallelepipeds aufweist, das vertikal oder horizontal positioniert ist.

5. Wärmespeicher nach einem der Ansprüche 1 oder 2, **dadurch gekennzeichnet, dass** der Kreislauf (6) mindestens ein Mehrwegventil (7) aufweist, das dazu dient, die Wärmeenergie in den Block (3) oder direkt zum Wärmeverbraucher zu leiten.

6. Wärmespeicher nach einem der Ansprüche 1 oder 2, **dadurch gekennzeichnet, dass** er aus mehreren Blöcken (3) aus Beton gebildet ist, die aneinander gekoppelt sind.

## Claims

1. A heat accumulator comprising at least one concrete block (3) intended for the storage of heat energy introduced into the block through a heat transfer fluid circulating in at least one circuit (6), this latter being composed partly of a conduit (2) made of material with good heat conductivity embedded within the block of solid material (3), said circuit (6) also serving to discharge the energy thus accumulated to a heat consumer, said block being installed in a chamber (4).

2. A heat accumulator comprising at least one concrete block (3) intended for the storage of heat energy introduced into the block through a heat transfer fluid circulating in at least one circuit (6), this letter being composed partly of a conduit (2) made of material with good heat conductivity embedded within the block of solid material (3), said circuit (6) also serving to discharge the energy thus accumulated to a heat consumer, said block being installed directly in the ground.

3. A heat accumulator according to one of claims 1 or 2, **characterised in that** the concrete block is thermally insulated (5).

4. A heat accumulator according to one of claims 1 or 2, **characterised in that** the concrete block (3) is parallelepipedal in shape, positioned vertically or horizontally.

5. A heat accumulator according to one of claims 1 or 2, **characterised in that** the circuit (6) includes at least one multiway valve (7), serving to direct the heat energy into the block (3) or directly to the heat consumer.

6. A heat accumulator according to one of claims 1 or 2, **characterised in that** it consists of several concrete blocks (3) coupled to each other.
